# EUROPÄISCHE PATENTSCHRIFT

(11) **EP 4 581 284 B1**
(45) Veröffentlichungstag und Bekanntmachung des Hinweises auf die Patenterteilung: **25.02.2026**
(21) Anmeldenummer: 23789978.6
(22) Anmeldetag: 12.10.2023
(51) Int. Cl.: F16H 48/08, F16H 48/38, F16H 48/40

(54) **KEGELRADDIFFERENTIALGETRIEBE FÜR EIN KRAFTFAHRZEUG SOWIE VERFAHREN ZUM HERSTELLEN EINES KEGELRADDIFFERENTIALGETRIEBES**
BEVEL GEAR DIFFERENTIAL GEARING FOR A MOTOR VEHICLE, AND METHOD FOR PRODUCING A BEVEL GEAR DIFFERENTIAL GEARING
ENGRENAGE DIFFÉRENTIEL À ROUE CONIQUE POUR UN VÉHICULE À MOTEUR ET PROCÉDÉ DE FABRICATION D'UN ENGRENAGE DIFFÉRENTIEL À ROUE CONIQUE

(30) Priorität: 19.10.2022 DE 102022127536
(43) Veröffentlichungstag der Anmeldung: 09.07.2025
(73) Patentinhaber: AUDI AG, 85057 Ingolstadt (DE)
(72) Erfinder: MERZ, Andrej, 85055 Ingolstadt (DE)
(74) Vertreter: Gleiss Große Schrell und Partner mbB
(86) Internationale Anmeldenummer: PCT/EP2023/078432
(87) Internationale Veröffentlichungsnummer: WO 2024/083658

(56) Entgegenhaltungen:
- EP-A1- 2 518 370
- EP-A1- 4 015 872
- EP-B1- 2 074 339
- US-B2- 10 107 375

## Beschreibung

Die Erfindung betrifft ein Kegelraddifferentialgetriebe für ein Kraftfahrzeug, mit einem Getriebegehäuse, in dem ein erstes Abtriebsrad, ein zweites Abtriebsrad sowie wenigstens ein sowohl mit dem ersten Abtriebsrad als auch mit dem zweiten Abtriebsrad kämmendes Planetenrad drehbar gelagert sind und mit dem ein Antriebsrad drehfest verbunden ist, wobei das Antriebsrad das Getriebegehäuse umgreifend mit einer Innenumfangsfläche an einer Außenumfangsfläche des Getriebegehäuses anliegt und sich in axialer Richtung bezüglich seiner Drehachse an einem aus dem Getriebegehäuse durch eine Bolzenaufnahme herausragenden Differentialbolzen abstützt, an dem das wenigstens eine Planetenrad drehbar gelagert ist. Die Erfindung betrifft weiterhin ein Verfahren zum Herstellen eines Kegelraddifferentialgetriebes.

Aus dem Stand der Technik ist beispielsweise die Druckschrift DE 10 2004 003 646 A1 bekannt. Diese beschreibt ein Ausgleichsgetriebe, bei welchem der Passungsdurchmesser Tellerrad-Differentialkorb kleiner ist als der Außendurchmesser des Differentialkorbs.

Weiterhin offenbart die Druckschrift DE 38 24 060 A1 ein selbstsperrendes Ausgleichsgetriebe mit mindestens einem in einem drehbaren Gehäuse drehbar gelagerten, verzahnten Ausgleichskegelrad, welches je mit zwei gleichfalls im Gehäuse drehbar gelagerten Achswellenkegelrädern kämmt. Zur Verringerung eines Schlupfs zwischen unterschiedlich belasteten Antriebsrädern wird vorgeschlagen, dass innerhalb des Gehäuses Elemente zur bedarfsweisen Behinderung einer Drehbewegung mindestens eines koaxial zu seiner Drehachse gehaltenen Ausgleichskegelrads oder der Achswellenkegelräder relativ zueinander vorgesehen sind.

Zudem offenbart die Druckschrift DE 40 42 173 A1 ein Differentialgetriebe mit mit einem antreibenden Zahnrad und mit Kegelrädern, die miteinander kämmen und in einem drehfest mit dem antreibenden Zahnrad verbundenen Gehäuse untergebracht sind, von denen mindestens ein Kegelrad als Ausgleichsrad mit einem Differentialbolzen gelagert und mit Achswellenkegelrädern in Eingriff ist. Dabei ist vorgesehen, dass die drehfeste Verbindung zwischen dem antreibenden Zahnrad und dem Gehäuse mittels eines geschweißten Parallelstoßes hergestellt ist.

Weitere Differentialgetriebe sowie Verfahren zu deren Herstellung sind aus den Druckschriften EP 2 518 370 A1, auf welcher die zweiteilige Anspruchsform basiert, EP 2 074 339 B1, EP 4 015 872 A1 und US 10,107,375 B2 bekannt.

Es ist Aufgabe der Erfindung, ein Kegelraddifferentialgetriebe für ein Kraftfahrzeug vorzuschlagen, welches gegenüber bekannten Kegelraddifferentialgetrieben Vorteile aufweist, insbesondere einfach und robust aufgebaut ist und zudem mit geringem Aufwand herstellbar beziehungsweise montierbar ist.

Dies wird erfindungsgemäß mit einem Kegelraddifferentialgetriebe für ein Kraftfahrzeug mit den Merkmalen des Anspruchs 1 erreicht. Dabei ist vorgesehen, dassder Differentialbolzen endseitig Aufnahmevertiefungen aufweist, die in axialer Richtung gesehen von Stützflächen begrenzt sind, an welchen das Antriebsrad zum Abstützen in axialer Richtung anliegt, wobei das Antriebsrad derart in die Aufnahmevertiefungen des Differentialbolzens eingreift, dass in axialer Richtung gesehen ein die Innenumfangsfläche aufweisender Antriebsradfuß des Antriebsrads den Differentialbolzen lediglich teilweise übergreift.

Vorteilhafte Ausgestaltungen mit zweckmäßigen Weiterbildungen der Erfindung sind in den abhängigen Ansprüchen angegeben. Es wird darauf hingewiesen, dass die in der Beschreibung erläuterten Ausführungsbeispiele nicht beschränkend sind; vielmehr sind beliebige Variationen der in der Beschreibung, den Ansprüchen sowie den Figuren offenbarten Merkmale realisierbar.

Das Kegelraddifferentialgetriebe ist vorzugsweise Bestandteil des Kraftfahrzeugs, kann jedoch selbstverständlich auch separat von diesem vorliegen. Beispielsweise dient es zur antriebstechnischen Anbindung einer Antriebseinrichtung an wenigstens eine angetriebene Radachse des Kraftfahrzeugs beziehungsweise an mehrere Räder des Kraftfahrzeugs. Die Antriebseinrichtung verfügt vorzugsweise über wenigstens ein Antriebsaggregat, welches beispielsweise als Brennkraftmaschine oder als elektrische Traktionsmaschine vorliegt.

Das Kegelraddifferentialgetriebe kann beispielsweise als Mittendifferentialgetriebe Verwendung finden. In diesem Fall ist sein Antriebsrad an die Antriebseinrichtung antriebstechnisch angeschlossen, wohingegen das erste Abtriebsrad mit einer ersten Radachse und das zweite Abtriebsrad mit einer zweiten Radachse des Kraftfahrzeugs antriebstechnisch gekoppelt sind, vorzugsweise starr und/oder permanent. Das bedeutet, dass die erste Radachse und die zweite Radachse über das Kegelradgetriebe an die Antriebseinrichtung beziehungsweise das Antriebsaggregat antriebstechnisch angeschlossen sind, insbesondere ausschließlich über das Kegelradgetriebe.

Das Kegelraddifferentialgetriebe kann jedoch auch als Achsdifferentialgetriebe Verwendung finden. In diesem Fall ist wiederum das Antriebsrad an die Antriebseinrichtung des Kraftfahrzeugs antriebstechnisch angeschlossen. Das erste Abtriebsrad ist mit einem ersten Rad einer Radachse und das zweite Abtriebsrad mit einem zweiten Rat derselben Radachse antriebstechnisch gekoppelt, vorzugsweise wiederum starr und/oder permanent. Somit sind das erste Rad und das zweite Rad über das Kegelradgetriebe an die Antriebseinrichtung beziehungsweise das Antriebsaggregat antriebstechnisch angeschlossen, insbesondere ausschließlich über das Kegelradgetriebe.

Das Kegelraddifferentialgetriebe dient dem Aufteilen eines über das Antriebsrad zugeführten Antriebsdrehmoments auf das erste Abtriebsrad und das zweite Abtriebsrad beziehungsweise dient es - allgemeiner ausgedrückt - einem Verteilen eines Drehmoments zwischen dem Antriebsrad, dem ersten Abtriebsrad und dem zweiten Abtriebsrad. Hierzu verfügt das Kegelraddifferentialgetriebe zusätzlich zu dem Antriebsrad, dem ersten Abtriebsrad und dem zweiten Abtriebsrad über das wenigstens eine Planetenrad, das in dem Getriebegehäuse drehbar gelagert ist. Das wenigstens eine Planetenrad kämmt sowohl mit dem ersten Abtriebsrad als auch mit dem zweiten Abtriebsrad. Es ist zudem mit dem Antriebsrad antriebstechnisch verbunden, nämlich über den Differentialbolzen. Hierzu ist es drehbar an dem Differentialbolzen gelagert, der antriebstechnisch mit dem Antriebsrad gekoppelt ist, vorzugsweise starr und/oder permanent.

Das erste Abtriebsrad ist um eine erste Abtriebsraddrehachse und das zweite Abtriebsrad um eine zweite Abtriebsraddrehachse drehbar gelagert, nämlich in dem Getriebegehäuse. Die erste Abtriebsraddrehachse und die zweite Abtriebsraddrehachse sind vorzugsweise identisch. Besonders bevorzugt fallen sie zudem mit der Drehachse des Antriebsrads zusammen, entsprechen dieser also. In diesem Fall sind das erste Abtriebsrad, das zweite Abtriebsrad und das Antriebsrad koaxial zueinander angeordnet. Das wenigstens eine Planetenrad ist um eine Planetenraddrehachse drehbar gelagert, wobei diese vorzugsweise mit der Längsmittelachse des Differentialbolzens zusammenfällt, an und mittels welchem das Planetenrad gelagert ist.

Eine Drehbewegung des Antriebsrads wird über den Differentialbolzen auf das wenigstens eine Planetenrad übertragen, sodass das Planetenrad das erste Abtriebsrad und das zweite Abtriebsrad antreibt beziehungsweise das ihm von dem Antriebsrad über den Differentialbolzen zugeführte Antriebsdrehmoment auf das erste Abtriebsrad und das zweite Abtriebsrad aufteilt. Soweit im Rahmen dieser Beschreibung von dem Planetenrad oder dem wenigstens einen Planetenrad die Rede ist, so sind die Ausführungen stets äquivalent. Selbstredend kann eine beliebige Anzahl an Planetenrädern vorliegt, beispielsweise verfügt das Kegelraddifferentialgetriebe über zwei Planetenräder oder vier Planetenräder. Jeweils zwei der Planetenräder sind hierbei auf einem Differentialbolzen drehbar gelagert.

Um eine einfache und kostengünstige Ausgestaltung des Kegelraddifferentialgetriebes zu erzielen, soll der Differentialbolzen dem Abstützen des Antriebsrads in axialer Richtung bezüglich seiner Drehachse dienen. Das bedeutet, dass der Differentialbolzen das Antriebsrad in Richtung der Drehachse in einer Richtung festsetzt, vorzugsweise in genau einer Richtung. Hierbei dient der Differentialbolzen insbesondere als Endanschlag für das Antriebsrad, sodass der Differentialbolzen das Antriebsrad bezüglich des Getriebegehäuses und in Richtung der Drehachse in einer ersten Richtung festsetzt, in einer der ersten Richtung entgegengesetzten zweiten Richtung jedoch zur Verlagerung freigibt. Diese Ausgestaltung des Kegelraddifferentialgetriebes ermöglicht die zumindest teilweise Übertragung von auf das Antriebsrad in axialer Richtung wirkenden Kräften auf das Getriebegehäuse über den Differentialbolzen, sodass eine anderweitig vorhandene Verbindung zwischen dem Antriebsrad und dem Getriebegehäuse, beispielsweise eine Schweißverbindung, weniger stark mechanisch belastet wird.

Grundsätzlich ist es hierbei vorgesehen, dass das Antriebsrad das Getriebegehäuse umgreift und mit seiner Innenumfangsfläche an der Außenumfangsfläche des Getriebegehäuses anliegt. Das Antriebsrad liegt also zunächst separat von dem Getriebegehäuse vor und wird erst bei der Montage des Kegelraddifferentialgetriebes auf das Getriebegehäuse aufgeschoben, nämlich bis zu dem Differentialbolzen. Während das Antriebsrad an dem Differentialbolzen anliegt, wird es an dem Getriebegehäuse befestigt, beispielsweise durch eine stoffschlüssige Verbindung, insbesondere durch das bereits erwähnte Schweißen.

Durch das Einleiten der auf das Antriebsrad wirkenden Kräfte in axialer Richtung in das Getriebegehäuse über den Differentialbolzen werden Kräfte, welche beispielsweise durch eine Schrägverzahnung des Antriebsrads verursacht werden, bei lediglich geringer Belastung der stoffschlüssigen Verbindung abgeleitet. Hierdurch ist das Kegelraddifferentialgetriebe äußerst robust, bei gleichzeitig einfachem Aufbau. Sofern im Rahmen dieser Beschreibung auf die axiale Richtung, radiale Richtung und/oder tangentiale Richtung beziehungsweise Umfangsrichtung Bezug genommen wird, so sind diese stets bezüglich der Drehachse des Antriebsrads zu interpretieren, sofern nicht auf etwas anderes hingewiesen wird.

Zusätzlich oder alternativ zu dem Abstützen des Antriebsrads an dem Differentialbolzen können das Antriebsrad und der Differentialbolzen auch derart ausgestaltet sein, dass der Differentialbolzen von dem Antriebsrad festgesetzt wird, insbesondere formschlüssig gehalten ist. Hierunter ist vorzugsweise zu verstehen, dass das Antriebsrad und der Differentialbolzen derart angeordnet und ausgestaltet sind, dass das Antriebsrad den Differentialbolzen bezüglich einer Längsmittelachse des Differentialbolzens in axialer Richtung und/oder in tangentialer Richtung festsetzt. Vorgesehen ist in diesem Fall also eine Ausgestaltung des Kegelraddifferentialgetriebes, bei welchem das Antriebsrad den Differentialbolzen formschlüssig in dem Getriebegehäuse hält und/oder formschlüssig an einer Drehbewegung um die eigene Achse hindert. Das bedeutet, dass auf eine zusätzliche Befestigung oder Sicherung des Differentialbolzens verzichtet werden kann, was den Aufbau des Kegelraddifferentialgetriebes im Vergleich mit bekannten Kegelraddifferentialgetriebe weiter vereinfacht.

Die Erfindung sieht vor, dass der Differentialbolzen endseitig Aufnahmevertiefungen aufweist, die in axialer Richtung gesehen von Stützflächen begrenzt sind, an welchen das Antriebsrad zum Abstützen in axialer Richtung anliegt. Die Aufnahmevertiefungen sind auf gegenüberliegenden Seiten des Differentialbolzens an diesem ausgestaltet. Das bedeutet, dass jedes der beiden freien Enden des Differentialbolzens eine solche Aufnahmevertiefung beziehungsweise eine der Aufnahmevertiefungen aufweist. Die Aufnahmevertiefungen sind in axialer Richtung von den Stützflächen begrenzt, welche den Endanschlag für das Antriebsrad dienen. Nach der Montage des Kegelraddifferentialgetriebes liegt also das Antriebsrad an den Stützflächen an, welche die Aufnahmevertiefungen begrenzen.

Die Stützfläche sind von dem Differentialbolzen gebildet. Vorzugsweise durchgreifen die Aufnahmevertiefungen den Differentialbolzen in axialer Richtung lediglich teilweise, vorzugsweise höchstens zu 60 %, höchstens 50 % oder höchstens 40 %. Besonders bevorzugt durchgreifen die Aufnahmevertiefungen den Differentialbolzen in axialer Richtung jeweils zur Hälfte, sodass die Stützflächen die Längsmittelachse des Differentialbolzens jeweils in sich aufnehmen. Das bedeutet, dass die Längsmittelachse die Stützflächen nicht unter einem von 0° verschiedenen Winkel schneidet, sondern dass die Stützflächen parallel zu der Längsmittelachse angeordnet sind und die Längsmittelachse auch durch beide Stützflächen verläuft.

Ist der Differentialbolzen kreiszylinderförmig oder zumindest im Wesentlichen kreiszylinderförmig, so sind die Aufnahmevertiefungen vorzugsweise halbkreiszylinderförmig. Die Aufnahmevertiefungen erstrecken sich in Richtung der Längsmittelachse des Differentialbolzens jeweils über lediglich einen Teil des Differentialbolzens hinweg, vorzugsweise jeweils über höchstens 10 %, höchstens 5 % oder höchstens 2,5 %, bezogen auf die gesamte Erstreckung des Differentialbolzens in Richtung seiner Längsmittelachse. Zusätzlich oder alternativ betragen ihre Erstreckungen in der genannten Richtung jeweils mindestens 1 % der gesamten Erstreckung des Differentialbolzens. Die beschriebene Ausgestaltung ermöglicht auf zuverlässige Art und Weise das Abstützen des Antriebsrads in axialer Richtung.

Gemäß der Erfindung ist vorgesehen, dass das Antriebsrad derart in die Aufnahmevertiefungen des Differentialbolzens eingreift, dass in axialer Richtung gesehen ein die Innenumfangsfläche aufweisender Antriebsradfuß des Antriebsrads den Differentialbolzen lediglich teilweise übergreift. Unter dem Antriebsradfuß ist ein dem Getriebegehäuse zugewandte Bereich des Antriebsrads zu verstehen. Beispielsweise schließen sich in radialer Richtung nach außen an den Antriebsradfuß eine Antriebsradwand und ein Zahnkranz des Antriebsrads an, wobei der Antriebsradfuß über die Antriebsradwand mit dem Zahnkranz antriebstechnisch gekoppelt ist. Besonders bevorzugt sind der Antriebsradfuß, die Antriebsradwand und der Zahnkranz einstückig und materialeinheitlich ausgestaltet.

Die Antriebsradwand weist bevorzugt in axialer Richtung kleinere Abmessungen auf als der Antriebsradfuß und der Zahnkranz. Weiter bevorzugt ist die Antriebsradwand in axialer Richtung mittig bezüglich des Zahnkranzes angeordnet. Der Antriebsradfuß kann jedoch in axialer Richtung asymmetrisch an der Antriebsradwand angeordnet sein, also in Richtung der Drehachse des Antriebsrads in einer ersten Richtung weiter über die Antriebsradwand überstehen als in einer der ersten Richtung entgegengesetzten zweiten Richtung. Die Innenumfangsfläche liegt in radialer Richtung innen an dem Antriebsradfuß vor. Beispielsweise erstreckt sich die Innenumfangsfläche innenseitig über den gesamten Antriebsradfuß hinweg.

Der Antriebsradfuß liegt bereichsweise an der Außenumfangsfläche des Getriebegehäuses an und ragt in die Aufnahmevertiefungen des Differentialbolzens hinein. Hierbei liegt er vorzugsweise an den Stützflächen an. Besonders bevorzugt weist der Antriebsradfuß hierzu eine Gegenstützfläche auf, welche parallel zu der Stützfläche verläuft, sodass die Gegenstützfläche des Antriebsradfußes flächig an den Stützflächen des Differentialbolzens anliegt, um das Antriebsrad in axialer Richtung abzustützen. Die Gegenstützfläche liegt vorzugsweise als durchgehende Ringfläche vor. Durch das Anliegen des Antriebsradfußes an den Stützflächen übergreift der Antriebsradfuß den Differentialbolzen in axialer Richtung lediglich teilweise. Somit stützt einerseits der Antriebsradfuß das Antriebsrad in axialer Richtung ab, andererseits hält das Antriebsrad den Differentialbolzen formschlüssig in dem Getriebegehäuse. Entsprechend sind keine zusätzlichen Befestigungsmittel notwendig, um den Differentialbolzen festzusetzen. Dies wird allein durch das teilweise Übergreifen des Differentialbolzens durch das Antriebsrad erzielt.

Eine Weiterbildung der Erfindung sieht vor, dass die Aufnahmevertiefungen in radialer Richtung nach innen von Aufnahmevertiefungsböden begrenzt sind, wobei wenigstens einer der Aufnahmevertiefungsböden von der Innenumfangsfläche des Antriebsrads beabstandet vorliegt. Die Aufnahmevertiefungen sind also jeweils von einer der Stützflächen und einem der Aufnahmevertiefungsböden begrenzt. Der Abstand zwischen den beiden Aufnahmevertiefungsböden ist vorzugsweise kleiner als ein Durchmesser der Innenumfangsfläche des Antriebsrads. Entsprechend ist zumindest einer der Aufnahmevertiefungsböden stets von der Innenumfangsfläche beabstandet angeordnet. Besonders bevorzugt liegen beide Aufnahmevertiefungsböden beabstandet von der Innenumfangsfläche in dem Getriebegehäuse vor. Hierdurch wird eine gegenseitige Beeinträchtigung von Antriebsrad und Differentialbolzen, beispielsweise aufgrund unterschiedlicher Wärmeausdehnungskoeffizienten, zuverlässig vermieden.

Eine Weiterbildung der Erfindung sieht vor, dass das Getriebegehäuse mehrteilig ist und ein erstes Gehäuseteil und ein zweites Gehäuseteil aufweist, wobei das erste Abtriebsrad in dem ersten Gehäuseteil und das zweite Abtriebsrad in dem zweiten Gehäuseteil gelagert und eine den Differentialbolzen aufnehmende Lagerausnehmung randgeschlossen in dem ersten Gehäuseteil ausgestaltet ist. Das Getriebegehäuse setzt sich also aus dem ersten Gehäuseteil und dem zweiten Gehäuseteil zusammen. Das erste Gehäuseteil und das zweite Gehäuseteil sind vorzugsweise Schmiedeteile, sind also durch Schmieden hergestellt. Es kann jedoch auch vorgesehen sein, dass zumindest eines der Gehäuseteile, beispielsweise das erste Gehäuseteil, als Sinterbauteil vorliegt, also durch Sintern hergestellt ist.

Die Gehäuseteile dienen der Lagerung der Abtriebswelle und des Planetenrads. Der Differentialbolzen ist in der Lagerausnehmung angeordnet, welche sich vorzugsweise aus beabstandet voneinander vorliegenden Teillagerausnehmungen zusammensetzt, in welche der Differentialbolzen auf gegenüberliegenden Seiten eingreift. Die Lagerausnehmung ist in Umfangsrichtung bezüglich ihrer Längsmittelachse randgeschlossen allein beziehungsweise ausschließlich in dem ersten Gehäuseteil ausgestaltet. Die Lagerausnehmung wird also nicht etwa in Umfangsrichtung von dem ersten Gehäuseteil und dem zweiten Gehäuseteil gemeinsam begrenzt, sondern die Lageausnehmung liegt nur in dem ersten Gehäuseteil vor und ist von dem zweiten Gehäuseteil beabstandet. Hierdurch wird eine einfache Montage des Kegelraddifferentialgetriebes erzielt.

Eine Weiterbildung der Erfindung sieht vor, dass das erste Gehäuseteil einen Verbindungsring aufweist, der eine das zweite Gehäuseteil aufnehmende Gehäuseteilaufnahme in radialer Richtung nach außen begrenzt und der einerseits an dem zweiten Gehäuseteil und andererseits an dem Antriebsrad anliegt und befestigt ist. Der Verbindungsring ist an einem Grundkörper des ersten Gehäuseteils angeordnet. Beispielsweise ist der Verbindungsring über einen Verbindungssteg mit dem Grundkörper verbunden, wobei der Verbindungssteg gegenüber dem Verbindungsring in radialer Richtung verjüngt ist. Hierzu weist der Verbindungsring radial innenseitig und/oder radial außenseitig eine Einkerbung auf, welche sich in Form einer Ringnut in Umfangsrichtung durchgehend oder zumindest nahezu durchgehend erstreckt. Besonders bevorzugt liegt eine solche Einkerbung beziehungsweise Ringnut sowohl radial innenseitig als auch radial außenseitig vor. Sie dienen einem einfachen Verbinden des Verbindungsring mit dem zweiten Gehäuseteil und dem Antriebsrad durch Schweißen, insbesondere durch Laserschweißen. Der Grundkörper, der Verbindungssteg und der Verbindungsring sind bevorzugt einstückig und materialeinheitlich ausgestaltet.

In jedem Fall begrenzt der Verbindungsring die in dem ersten Gehäuseteil vorliegende Gehäuseteilaufnahme in radialer Richtung nach außen, nämlich vorzugsweise durchgehend. Nach der Montage des Kegelraddifferentialgetriebes liegt das zweite Gehäuseteil in der Gehäuseteilaufnahme derart vor, dass es von innen an dem Verbindungsring anliegt. Gleichzeitig liegt das Antriebsrad von außen an dem Verbindungsring an. Das erste Gehäuseteil wird während der Montage des Kegelraddifferentialgetriebes sowohl an dem zweiten Gehäuseteil als auch an dem Antriebsrad befestigt, vorzugsweise stoffschlüssig, beispielsweise durch Schweißen. Der Verbindungsring ermöglicht dies auf besonders einfache Art und Weise. Es kann vorgesehen sein, dass dem Verbindungsring eine Entlüftungsbohrung zugeordnet ist, welche eine Wand des ersten Gehäuseteils in radialer Richtung vollständig durchgreift. Beispielsweise ist die Entlüftungsbohrung in der Einkerbung beziehungsweise einer der Einkerbungen ausgestaltet beziehungsweise mündet in diese ein. Auch die Entlüftungsbohrung dient dem zuverlässigen Herstellen der stoffschlüssigen Verbindung.

Eine Weiterbildung der Erfindung sieht vor, dass zusätzlich zu dem Differentialbolzen ein weiterer Differentialbolzen vorliegt, der den Differentialbolzen zumindest teilweise durchgreift. Der weitere Differentialbolzen dient der Lagerung wenigstens eines weiteren Planetenrads in dem Getriebegehäuse. Somit sind mittels des Differentialbolzens das mindestens eine Planetenrad und mittels des weiteren Differentialbolzens das wenigstens eine weitere Planetenrad drehbar in dem Getriebegehäuse gelagert. Vorzugsweise liegen an jedem der Differentialbolzen, also sowohl an dem Differentialbolzen als auch an dem weiteren Differentialbolzen, jeweils zwei Planetenräder vor und sind mittels des jeweiligen Differentialbolzens drehbar gelagert.

Auch der weitere Differentialbolzen dient vorzugsweise dem Abstützen des Antriebsrads in axialer Richtung. Hierzu weist er vorzugsweise analog zu dem Differentialbolzen endseitig Aufnahmevertiefungen auf. Auf die entsprechenden Ausführungen wird verwiesen, diese sind analog heranziehbar. Um eine einfache Montage des weiteren Differentialbolzen zu erzielen, greift dieser in den Differentialbolzen ein beziehungsweise durchgreift ihn zumindest teilweise. Besonders bevorzugt setzt sich der weitere Differentialbolzen aus mehreren Teildifferentialbolzen zusammen, welche von gegenüberliegenden Seiten in den Differentialbolzen beziehungsweise ein Bohrung des Differentialbolzens eingesetzt werden. Da das Festlegen sowohl des Differentialbolzens als auch des weiteren Differentialbolzens mittels des Antriebsrads erfolgt, ist dies ohne weiteres möglich.

Die Erfindung betrifft weiterhin ein Verfahren zum Herstellen eines Kegelraddifferentialgetriebes für ein Kraftfahrzeug, nämlich eines Kegelraddifferentialgetriebes gemäß den Ausführungen im Rahmen dieser Beschreibung, wobei das Kegelraddifferentialgetriebe über ein Getriebegehäuse verfügt, in dem ein erstes Abtriebsrad, ein zweites Abtriebsrad sowie wenigstens ein sowohl mit dem ersten Abtriebsrad als auch mit dem zweiten Abtriebsrad kämmendes Planetenrad drehbar gelagert werden und mit dem ein Antriebsrad drehfest verbunden wird. Dabei ist vorgesehen, dass das Antriebsrad das Getriebegehäuse umgreifend mit einer Innenumfangsfläche an einer Außenumfangsfläche des Getriebegehäuses anliegend angeordnet wird und sich in axialer Richtung bezüglich seiner Drehachse an einem aus dem Getriebegehäuse herausragenden Differentialbolzen abstützt, an dem das wenigstens eine Planetenrad drehbar gelagert wird. Weiterhin ist vorgesehen, dass der Differentialbolzen endseitig Aufnahmevertiefungen aufweist, die in axialer Richtung gesehen von Stützflächen begrenzt sind, an welchen das Antriebsrad zum Abstützen in axialer Richtung anliegt, wobei das Antriebsrad derart in die Aufnahmevertiefungen des Differentialbolzens eingreift, dass in axialer Richtung gesehen ein die Innenumfangsfläche aufweisender Antriebsradfuß des Antriebsrads den Differentialbolzen lediglich teilweise übergreift.

Auf die Vorteile einer derartigen Vorgehensweise bei dem Herstellen des Kegelradgetriebe sowie der entsprechenden Ausgestaltung des Kegelraddifferentialgetriebes wurde bereits hingewiesen. Sowohl das Kegelraddifferentialgetriebe als auch das Verfahren zu seinem Herstellen können gemäß den Ausführungen im Rahmen dieser Beschreibung weitergebildet sein, sodass insoweit auf diese verwiesen wird.

Insgesamt ist bei dem beschriebenen Verfahren vorgesehen, dass das Antriebsrad derart an dem Getriebegehäuse angeordnet wird, dass es dieses umgreift und mit der Innenumfangsfläche an der Außenumfangsfläche anliegt, sodass es sich in axialer Richtung an dem Differentialbolzen abstützt.

Die Erfindung sieht vor, dass das Verfahren zum Herstellen des Kegelraddifferentialgetriebes die folgenden Schritte aufweist: Einsetzen des ersten Abtriebsrads in ein erstes Gehäuseteil des Getriebegehäuses; Einbringen des Differentialbolzens in eine Lagerausnehmung des ersten Gehäuseteils und Aufbringen des wenigsten einen Planetenrads auf den Differentialbolzen; Einlegen des zweiten Abtriebsrads in das erste Gehäuseteil; Komplettieren des Getriebegehäuses durch Anlegen eines zweiten Gehäuseteils an das erste Gehäuseteil; Aufsetzen des Antriebsrads bis zum Erreichen eines von Stützflächen des Differentialbolzens gebildeten Endanschlags; sowie Befestigen des ersten Gehäuseteils sowohl an dem zweiten Gehäuseteil als auch an dem Antriebsrad. Die aufgeführten Schritte werden bevorzugt in der genannten Reihenfolge durchgeführt. Das Befestigen des ersten Gehäuseteils an dem zweiten Gehäuseteil und dem Antriebsrad erfolgt besonders bevorzugt stoffschlüssig, insbesondere durch Schweißen, besonders bevorzugt durch Laserschweißen.

Das beschriebene Vorgehen ermöglicht ein einfaches und kostengünstiges Herstellen des Kegelraddifferentialgetriebes.

Eine Weiterbildung der Erfindung sieht vor, dass zum Befestigen das erste Gehäuseteil entlang einer ersten Kreislinie mit dem zweiten Gehäuseteil und entlang einer konzentrisch zu der ersten Kreislinie angeordneten zweiten Kreislinie mit dem Antriebsrad stoffschlüssig verbunden wird. Das stoffschlüssige Verbindung entlang der ersten Kreislinie und der zweiten Kreislinie erfolgt besonders bevorzugt zumindest zeitweise gleichzeitig. Das bedeutet, dass das stoffschlüssige Verbinden entlang der zweiten Kreislinie zumindest teilweise gleichzeitig mit dem stoffschlüssige Verbinden entlang der ersten Kreislinie vorgenommen wird. Besonders bevorzugt erfolgt das Verbinden entlang der beiden Kreislinien gleichzeitig, jedoch mit einem bestimmten Versatz in Umfangsrichtung. Der Versatz beträgt hierbei beispielsweise mindestens 90° und höchstens 270°, mindestens 135° und höchstens 235°, mindestens 150° und höchstens 210° oder in etwa oder genau 180°.

Die in der Beschreibung beschriebenen Merkmale und Merkmalskombinationen, insbesondere die in der nachfolgenden Figurenbeschreibung beschriebenen und/oder in den Figuren gezeigten Merkmale und Merkmalskombinationen, sind nicht nur in der jeweils angegebenen Kombination, sondern auch in anderen Kombinationen oder in Alleinstellung verwendbar, soweit hierdurch der von den Ansprüchen definierte Rahmen der Erfindung nicht verlassen wird. Es sind somit auch Ausführungsformen als von der Erfindung umfasst anzusehen, die in der Beschreibung und/oder den Figuren nicht explizit gezeigt oder erläutert sind, jedoch aus den erläuterten Ausführungsformen hervorgehen oder aus ihnen ableitbar sind, sofern diese Ausführungsformen im Rahmen der Ansprüche liegen.

Die Erfindung wird nachfolgend anhand der der Zeichnung dargestellten Ausführungsbeispiele näher erläutert, ohne dass eine Beschränkung der Erfindung erfolgt. Dabei zeigt:
- Figur 1: eine schematische Darstellung eines Kegelraddifferentialgetriebes bei einem ersten Herstellungsschritt,
- Figur 2: eine schematische Darstellung des Kegelraddifferentialgetriebes bei einem zweiten Herstellungsschritt,
- Figur 3: eine schematische Darstellung des Kegelraddifferentialgetriebes bei einem dritten Herstellungsschritt,
- Figur 4: eine schematische Darstellung eines Differentialbolzens sowie eines weiteren Differentialbolzens, sowie
- Figur 5: eine schematische Schnittdarstellung des Differentialbolzens und des weiteren Differentialbolzens.

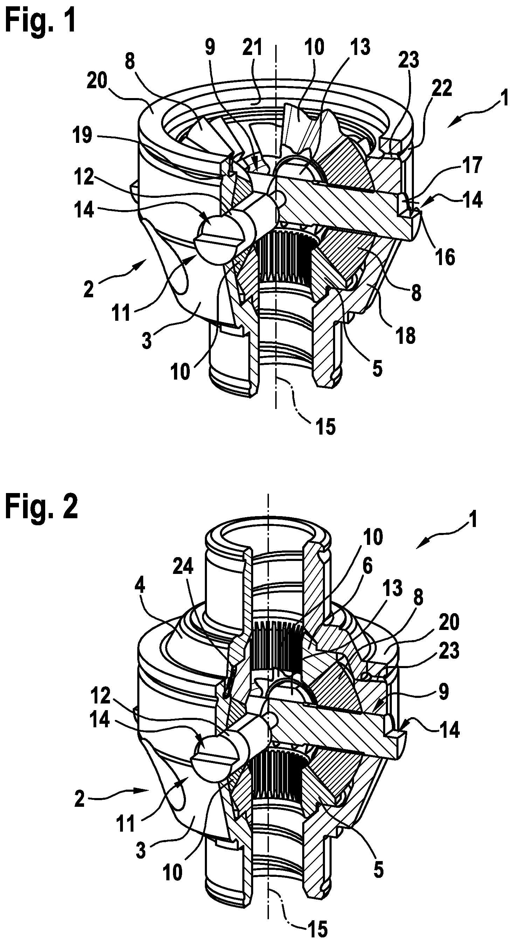

Die Figur 1 zeigt eine schematische Darstellung eines Kegelraddifferentialgetriebes 1 bei einem ersten Herstellungsschritt. Das Kegelraddifferentialgetriebe 1 weist ein Getriebegehäuse 2 auf, das ein erstes Gehäuseteil 3 und ein nicht gezeigtes zweites Gehäuseteil 4 umfasst. In dem ersten Gehäuseteil 3 ist ein erstes Abtriebsrad 5 drehbar gelagert, in dem zweiten Gehäuseteil 4 ein nicht dargestelltes zweites Abtriebsrad 6. Das Getriebegehäuse 2 ist mit einem ebenfalls nicht gezeigten Antriebsrad 7 drehfest verbunden und dient der drehbaren Lagerung wenigstens eines Planetenrats 8, welches mit dem ersten Antriebsrad 5 und dem zweiten Abtriebsrad 6 kämmt und mit dem Antriebsrad 7 antriebstechnisch gekoppelt ist. In dem dargestellten Ausführungsbeispiel liegen mehrere Planetenräder 8 vor, die jeweils mittels eines Differentialbolzens 9 drehbar in dem Getriebegehäuse 2 gelagert sind.

Zusätzlich zu den Planetenrädern 8 verfügt das hier dargestellte Kegelraddifferentialgetriebe 1 - optional - über wenigstens ein weiteres Planetenrad 10, in dem gezeigten Ausführungsbeispiel über mehrere weitere Planetenräder 10. Diese sind mittels eines weiteren Differentialbolzens 11 ebenfalls in dem Getriebegehäuse 2 drehbar gelagert. Der weitere Differentialbolzen 11 setzt sich aus einem ersten Teildifferentialbolzen 12 und einem zweiten Teildifferentialbolzen 13 zusammen. Diese greifen von gegenüberliegenden Seiten in den Differentialbolzen 9 ein, welcher hier im Übrigen teilweise geschnitten dargestellt ist. An den Differentialbolzen 9 und 11 sind jeweils Aufnahmevertiefungen 14 ausgestaltet, die bezüglich einer Drehachse 15 der Abtriebsräder 5 und 6 sowie des Antriebsrads 7 gesehen in axialer Richtung von Stützflächen 16 und in radialer Richtung nach innen von Aufnahmevertiefungsböden 17 begrenzt sind. Die Aufnahmevertiefungen 17 durchgreifen die Differentialbolzen 9 und 11 in Axialrichtung somit lediglich teilweise, vorzugsweise zur Hälfte.

Das erste Gehäuseteil 3 weist einen Grundkörper 18 auf, an welchen über einen Verbindungssteg 19 ein Verbindungsring 20 angebunden ist. Der Verbindungsring 20 dient der Anbindung des ersten Gehäuseteils 3 an den zweiten Gehäuseteil 4 und an das Antriebsrad 7. Der Verbindungssteg 19 ist ebenfalls grundsätzlich ringförmig, weist jedoch in radialer Richtung eine geringere Stärke auf als der Verbindungsring 20. Hierzu ist in radialer Richtung innen eine erste Einkerbung 21 und in radialer Richtung außen eine zweite Einkerbung 22 in dem Verbindungssteg 19 ausgestaltet. Der Verbindungssteg 19 kann zudem von einer Entlüftungsöffnung 23 durchgriffen sein. Die Einkerbungen 21 und 22 dienen der Aufnahme von Schmelzmaterial während eines Verschweißens des Verbindungsstegs 19 mit dem zweiten Gehäuseteil 4 und dem Antriebsrad 7.

Die Figur 2 zeigt das Kegelraddifferentialgetriebe 1 in schematischer Form bei einem zweiten Herstellungsschritt. In diesem sind das zweite Abtriebsrad 6 und das zweite Gehäuseteil 4 in das erste Gehäuseteil 3 eingesetzt. Es ist erkennbar, dass das zweite Gehäuseteil 4 in einer Gehäuseteilaufnahme 24 des ersten Gehäuseteils 3 angeordnet ist und in radialer Richtung von innen an dem Verbindungsring 20 anliegt. Gleichzeitig erstreckt es sich an dem Verbindungssteg 19 vorbei und liegt in axialer Richtung an dem Grundkörper 18 an und stützt sich an diesem ab.

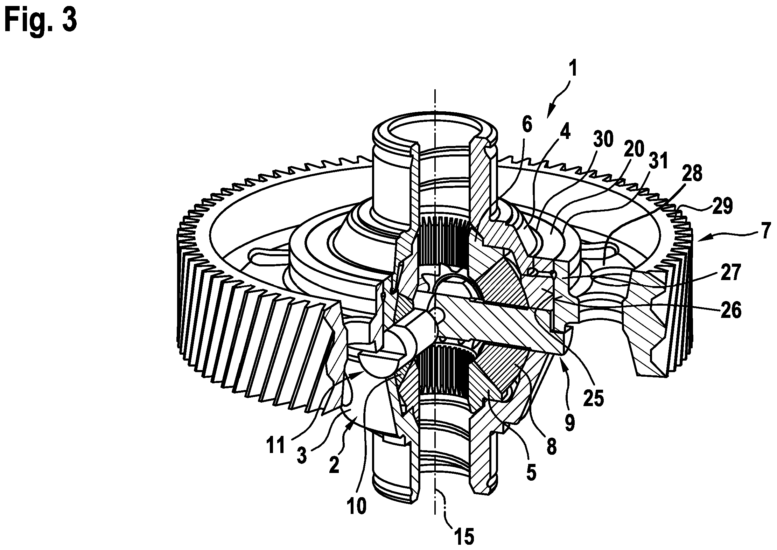

Die Figur 3 zeigt eine weitere schematische Darstellung des Kegelraddifferentialgetriebes 1, diesmal bei einem dritten Herstellungsschritt. In diesem wird das Antriebsrad 7 an dem Getriebegehäuse 2, genauer gesagt an dem ersten Gehäuseteil 3 angeordnet. Das Antriebsrad 7 liegt mit einer Innenumfangsfläche 25 an einer Außenumfangsfläche 26 des Getriebegehäuses 2 an. Die Innenumfangsfläche 25 liegt hierbei an einem Antriebsradfuß 27 des Antriebsrads 7 vor, der über eine Antriebsradwand 28 mit einem Zahnkranz 29 des Antriebsrads 7 drehfest verbunden ist. Der Antriebsradfuß 27 liegt in radialer Richtung außen an dem Verbindungsring 20 an und erstreckt sich über das erste Gehäuseteil 3 beziehungsweise dessen Außenumfangsfläche 26 hinweg bis über den Differentialbolzen 9 und den weiteren Differentialbolzen 11.

Der Antriebsradfuß 27 übergreift somit die Differentialbolzen 9 und 11 teilweise, insbesondere nur teilweise. Er liegt hierbei an den Stützflächen 16 an, nämlich vorzugsweise derart, dass die Differentialbolzen 9 und 11 in Umfangsrichtung bezüglich ihrer jeweiligen Längsmittelachse festgesetzt sind. Durch das Übergreifen des der Differentialbolzens 9 und 11 durch den Antriebsradfuß 27 sind somit die Differentialbolzen 9 und 11 zum einen in dem Getriebegehäuse 2 festgesetzt und zum anderen auch in tangentialer Richtung bezüglich ihrer jeweiligen Längsmittelachse festgesetzt. Nach dem Aufsetzen des Antriebsrads 7 auf das Getriebegehäuse 2 bis zum Erreichen der Stützflächen 16 wird das erste Gehäuseteil 3 sowohl an dem zweiten Gehäuseteil 4 als auch an dem Antriebsrad 7 befestigt. Das Befestigen des ersten Gehäuseteils 3 an dem zweiten Gehäuseteil 4 erfolgt entlang einer ersten Kreislinie 30, das Befestigen des ersten Gehäuseteils 3 an dem Antriebsrad 7 entlang einer zweiten Kreislinie 31. Das Befestigen erfolgt bevorzugt jeweils durch Schweißen, insbesondere durch Laserschweißen.

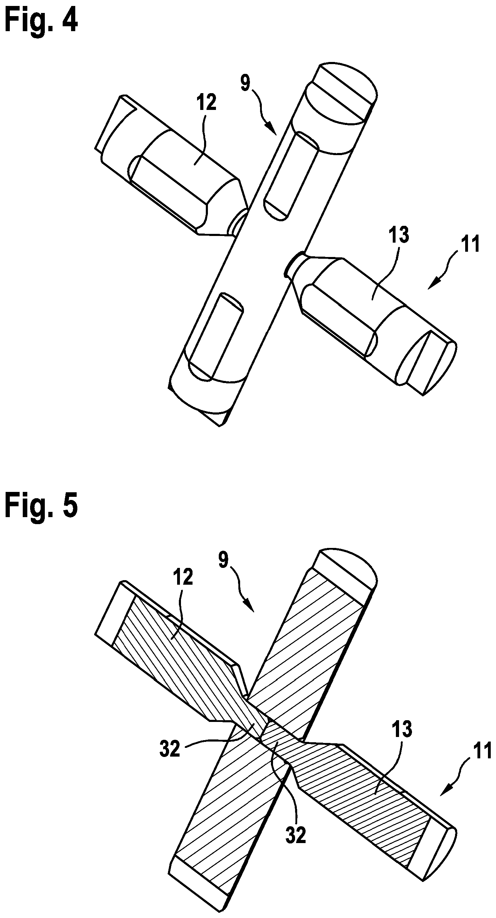

Die Figur 4 zeigt eine schematische Darstellung der Differentialbolzen 9 und 11. Es wird nochmals deutlich, dass sich der weitere Differentialbolzen 11 aus den beiden Teildifferentialbolzen 12 und 13 zusammensetzt, die auf ihrer radial innen liegenden Seite in den Differentialbolzen 9 eingreifen. Hierzu verjüngen sie sich jeweils in Richtung des Differentialbolzens 9.

Die Figur 5 zeigt eine schematische Schnittdarstellung der Differentialbolzen 9 und 11. Es ist ersichtlich, dass die Teildifferentialbolzen 12 und 13 jeweils einen Vorsprung 32 aufweisen, der in den Differentialbolzen 9 eingreift. Die Vorsprünge 32 der beiden Teildifferentialbolzen 12 und 13 stoßen hierbei vorzugsweise mit ihren freien Enden aneinander, sodass also die Teildifferentialbolzen 12 und 13 aneinander anliegen und gemeinsam den Differentialbolzen 9 vollständig durchgreifen. Hierdurch ist eine hinreichende Stabilität des weiteren Differentialbolzens 11 gewährleistet.

### BEZUGSZEICHENLISTE:

- 1: Kegelraddifferentialgetriebe
- 2: Getriebegehäuse
- 3: 1. Gehäuseteil
- 4: 2. Gehäuseteil
- 5: 1. Abtriebsrad
- 6: 2. Abtriebsrad
- 7: Antriebsrad
- 8: Planetenrad
- 9: Differentialbolzen
- 10: weiteres Planetenrad
- 11: weiterer Differentialbolzen
- 12: 1. Teildifferentialbolzen
- 13: 2. Teildifferentialbolzen
- 14: Aufnahmevertiefung
- 15: Drehachse
- 16: Stützfläche
- 17: Aufnahmevertiefungsboden
- 18: Grundkörper
- 19: Verbindungssteg
- 20: Verbindungsring
- 21: 1. Einkerbung
- 22: 2. Einkerbung
- 23: Entlüftungsöffnung
- 24: Gehäuseteilaufnahme
- 25: Innenumfangsfläche
- 26: Außenumfangsfläche
- 27: Antriebsradfuß
- 28: Antriebsradwand
- 29: Zahnkranz
- 30: 1. Kreislinie
- 31: 2. Kreislinie
- 32: Vorsprung

## Patentansprüche

1. Kegelraddifferentialgetriebe (1) für ein Kraftfahrzeug, mit einem Getriebegehäuse (2), in dem ein erstes Abtriebsrad (5), ein zweites Abtriebsrad (6) sowie wenigstens ein sowohl mit dem ersten Abtriebsrad (5) als auch mit dem zweiten Abtriebsrad (6) kämmendes Planetenrad (8) drehbar gelagert sind und mit dem ein Antriebsrad (7) drehfest verbunden ist, wobei das Antriebsrad (7) das Getriebegehäuse (2) umgreifend mit einer Innenumfangsfläche (25) an einer Außenumfangsfläche (26) des Getriebegehäuses (2) anliegt und sich in axialer Richtung bezüglich seiner Drehachse (15) an einem aus dem Getriebegehäuse (2) durch eine Bolzenaufnahme herausragenden Differentialbolzen (9) abstützt, an dem das wenigstens eine Planetenrad (8) drehbar gelagert ist, **dadurch gekennzeichnet, dass** der Differentialbolzen (9) endseitig Aufnahmevertiefungen (14) aufweist, die in axialer Richtung gesehen von Stützflächen (16) begrenzt sind, an welchen das Antriebsrad (7) zum Abstützen in axialer Richtung anliegt, wobei das Antriebsrad (7) derart in die Aufnahmevertiefungen (14) des Differentialbolzens (9) eingreift, dass in axialer Richtung gesehen ein die Innenumfangsfläche (25) aufweisender Antriebsradfuß (27) des Antriebsrads (7) den Differentialbolzen (9) lediglich teilweise übergreift.

2. Kegelraddifferentialgetriebe nach einem der vorhergehenden Ansprüche, **dadurch gekennzeichnet, dass** die Aufnahmevertiefungen (14) in radialer Richtung nach innen von Aufnahmevertiefungsböden (17) begrenzt sind, wobei wenigstens einer der Aufnahmevertiefungsböden (17) von der Innenumfangsfläche (25) des Antriebsrads (7) beabstandet vorliegt.

3. Kegelraddifferentialgetriebe nach einem der vorhergehenden Ansprüche, **dadurch gekennzeichnet, dass** das Getriebegehäuse (2) mehrteilig ist und ein erstes Gehäuseteil (3) und ein zweites Gehäuseteil (4) aufweist, wobei das erste Abtriebsrad (5) in dem ersten Gehäuseteil (3) und das zweite Abtriebsrad (6) in dem zweiten Gehäuseteil (4) gelagert und eine den Differentialbolzen (9) aufnehmende Lagerausnehmung randgeschlossen in dem ersten Gehäuseteil (3) ausgestaltet ist.

4. Kegelraddifferentialgetriebe nach Anspruch 3, **dadurch gekennzeichnet, dass** das erste Gehäuseteil (3) einen Verbindungsring (20) aufweist, der eine das zweite Gehäuseteil (4) aufnehmende Gehäuseteilaufnahme (24) in radialer Richtung nach außen begrenzt und der einerseits an dem zweiten Gehäuseteil (4) und andererseits an dem Antriebsrad (7) anliegt und befestigt ist.

5. Kegelraddifferentialgetriebe nach einem der vorhergehenden Ansprüche, **dadurch gekennzeichnet, dass** zusätzlich zu dem Differentialbolzen (9) ein weiterer Differentialbolzen (11) vorliegt, der den Differentialbolzen (9) zumindest teilweise durchgreift.

6. Verfahren zum Herstellen eines Kegelraddifferentialgetriebes (1) für ein Kraftfahrzeug, nämlich eines Kegelraddifferentialgetriebes (1) nach einem oder mehreren der vorhergehenden Ansprüche, **gekennzeichnet durch** die folgenden Schritte:
- Einsetzen des ersten Abtriebsrads (5) in ein erstes Gehäuseteil (3) des Getriebegehäuses (2),
- Einbringen des Differentialbolzens (9) in eine Lagerausnehmung des ersten Gehäuseteils (3) und Aufbringen des wenigstens einen Planetenrads (8) auf den Differentialbolzen (9),
- Einlegen des zweiten Abtriebsrads (6) in das erste Gehäuseteil (3),
- Komplettieren des Getriebegehäuses (2) durch Anlegen eines zweiten Gehäuseteils (4) an das erste Gehäuseteil (3),
- Aufsetzen des Antriebsrads (7) bis zum Erreichen eines von Stützflächen (16) des Differentialbolzens (9) gebildeten Endanschlags, sowie
- Befestigen des ersten Gehäuseteils (3) sowohl an dem zweiten Gehäuseteil (4) als auch an dem Antriebsrad (7).

7. Verfahren nach Anspruch 6, **dadurch gekennzeichnet, dass** zum Befestigen das erste Gehäuseteil (3) entlang einer ersten Kreislinie (30) mit dem zweiten Gehäuseteil (4) und entlang einer konzentrisch zu der ersten Kreislinie (30) angeordneten zweiten Kreislinie (31) mit dem Antriebsrad (7) stoffschlüssig verbunden wird.

## Claims

1. Bevel gear differential gearing (1) for a motor vehicle, with a gearing housing (2) in which a first output gear (5), a second output gear (6) and at least one planetary gear (8) meshing with both the first output gear (5) and the second output gear (6) are rotatably mounted and to which a drive gear (7) is connected in a rotationally fixed manner, wherein the drive gear (7) surrounds the gearing housing (2) with an inner circumferential surface (25) abutting against an outer circumferential surface (26) of the gearing housing (2) and is supported in the axial direction relative to its axis of rotation (15) on a differential bolt (9) protruding from the gearing housing (2) through a bolt receptacle on which the at least one planetary gear (8) is rotatably mounted, **characterised in that** the differential bolt (9) comprises receiving recesses (14) at its ends which, viewed in the axial direction, are delimited by support surfaces (16) against which the drive gear (7) abuts for support in the axial direction, wherein the drive gear (7) engages in the receiving recesses (14) of the differential bolt (9) in such a way that, viewed in the axial direction, a drive gear base (27) of the drive gear (7) comprising the inner circumferential surface (25) only partially overlaps the differential bolt (9).

2. Bevel gear differential gearing according to one of the preceding claims, **characterised in that** the receiving recesses (14) are delimited in the radial direction inwards by receiving recess bottoms (17), wherein at least one of the receiving recess bottoms (17) is spaced apart from the inner circumferential surface (25) of the drive gear (7).

3. Bevel gear differential gearing according to one of the preceding claims, **characterised in that** the gearing housing (2) is multi-part and comprises a first housing part (3) and a second housing part (4), wherein the first output gear (5) is mounted in the first housing part (3) and the second output gear (6) is mounted in the second housing part (4), and a bearing opening receiving the differential bolt (9) is configured in the first housing part (3) with a closed edge.

4. Bevel gear differential gearing according to claim 3, **characterised in that** the first housing part (3) comprises a connecting ring (20) which delimits a housing part receptacle (24) receiving the second housing part (4) in the radial direction outwards and which abuts against and is fixed to the second housing part (4) on the one hand and to the drive gear (7) on the other hand.

5. Bevel gear differential gearing according to one of the preceding claims, **characterised in that**, in addition to the differential bolt (9), a further differential bolt (11) is present which at least partially reaches through the differential bolt (9).

6. Method for producing a bevel gear differential gearing (1) for a motor vehicle, namely a bevel gear differential gearing (1) according to one or more of the preceding claims, **characterised by** the following steps:
- setting the first output gear (5) in a first housing part (3) of the gearing housing (2),
- inserting the differential bolt (9) into a bearing opening in the first housing part (3) and applying at least one planetary gear (8) on the differential bolt (9),
- placing the second output gear (6) in the first housing part (3),
- completing the gearing housing (2) by abutting a second housing part (4) onto the first housing part (3),
- putting on the drive gear (7) until it reaches an end stop formed by support surfaces (16) of the differential bolt (9), and
- fastening the first housing part (3) both to the second housing part (4) and to the drive gear (7).

7. Method according to claim 6, **characterised in that**, for fastening, the first housing part (3) is connected in a material-bonding manner to the second housing part (4) along a first circular line (30) and to the drive gear (7) along a second circular line (31) arranged concentrically to the first circular line (30).

## Revendications

1. Engrenage différentiel à pignons coniques (1) pour un véhicule à moteur, avec un carter d'engrenage (2), dans lequel un premier pignon de sortie (5), un deuxième pignon de sortie (6) ainsi qu'au moins un pignon planétaire (8) engrenant à la fois avec le premier pignon de sortie (5) et avec le deuxième pignon de sortie (6) sont logés de manière rotative, et avec lequel un pignon d'entraînement (7) est relié de manière non rotative, dans lequel le pignon d'entraînement (7) entoure le carter d'engrenage (2) avec une surface circonférentielle intérieure (25) reposant contre une surface circonférentielle extérieure (26) du carter d'engrenage (2) et est en appui dans la direction axiale par rapport à son axe de rotation (15) sur un boulon différentiel (9) faisant saillie du carter d'engrenage (2) à travers un logement de boulon, sur lequel l'au moins un pignon planétaire (8) est logé de manière rotative, **caractérisé en ce que** le boulon différentiel (9) présente, à son extrémité, des cavités de réception (14) qui, vues dans la direction axiale, sont délimitées par des surfaces d'appui (16) sur lesquelles le pignon d'entraînement (7) est en appui pour un support dans la direction axiale, le pignon d'entraînement (7) s'engageant dans les cavités de réception (14) du boulon différentiel (9) de telle sorte que, vu dans la direction axiale, un pied de pignon d'entraînement (27) du pignon d'entraînement (7) présentant la surface circonférentielle intérieure (25) ne recouvre que partiellement le boulon différentiel (9).

2. Engrenage différentiel à pignons coniques selon l'une des revendications précédentes, **caractérisé en ce que** les cavités de réception (14) sont délimitées dans la direction radiale vers l'intérieur par des fonds de cavités de réception (17), dans lequel au moins un des fonds de cavités de réception (17) est espacé de la surface circonférentielle intérieure (25) du pignon d'entraînement (7).

3. Engrenage différentiel à pignons coniques selon l'une des revendications précédentes, **caractérisé en ce que** le carter d'engrenage (2) est composé de plusieurs parties et présente une première partie de carter (3) et une deuxième partie de carter (4), dans lequel le premier pignon de sortie (5) est logé dans la première partie de carter (3) et le deuxième pignon de sortie (6) est logé dans la deuxième partie de carter (4), et un évidement de réception recevant le boulon différentiel (9) est réalisé dans la première partie de carter (3) avec un bord fermé.

4. Engrenage différentiel à pignons coniques selon la revendication 3, **caractérisé en ce que** la première partie de carter (3) présente une bague de liaison (20) qui délimite dans la direction radiale vers l'extérieur un logement de partie de carter (24) recevant la deuxième partie de carter (4) et qui est en appui contre et fixée à, d'une part, la deuxième partie de carter (4) et, d'autre part, le pignon d'entraînement (7).

5. Engrenage différentiel à pignons coniques selon l'une des revendications précédentes, **caractérisé en ce que,** outre le boulon différentiel (9), un autre boulon différentiel (11) est présent et traverse au moins partiellement le boulon différentiel (9).

6. Procédé de fabrication d'un engrenage différentiel à pignons coniques (1) pour un véhicule à moteur, à savoir d'un engrenage différentiel à pignons coniques selon une ou plusieurs de revendications précédentes, **caractérisé par** les étapes suivantes :
- Insertion du premier pignon de sortie (5) dans une première partie de carter (3) du carter d'engrenage (2),
- Introduction du boulon différentiel (9) dans un évidement de réception de la première partie de carter (3) et pose de l'au moins un pignon planétaire (8) sur le boulon différentiel (9),
- Insertion du deuxième pignon de sortie (6) dans la première partie de carter (3),
- Complétion du carter d'engrenage (2) en posant une deuxième partie de carter (4) sur la première partie de carter (3),
- Pose du pignon d'entraînement (7) jusqu'à atteindre une butée d'extrémité formée par des surfaces d'appui (16) du boulon différentiel (9), ainsi que
- Fixation de la première partie de carter (3) à la deuxième partie de carter (4) ainsi qu'au pignon d'entraînement (7).

7. Procédé selon la revendication 6, **caractérisé en ce que,** pour la fixation, la première partie de carter (3) est reliée par adhérence de matière à la deuxième partie de carter (4) le long d'une première ligne circulaire (30) et au pignon d'entraînement (7) le long d'une deuxième ligne circulaire (31) disposée de manière concentrique par rapport à la première ligne circulaire (30).
